# EUROPÄISCHE PATENTSCHRIFT

(11) **EP 1 990 363 B1**
(45) Veröffentlichungstag und Bekanntmachung des Hinweises auf die Patenterteilung: **29.02.2012**
(21) Anmeldenummer: 08008390.0
(22) Anmeldetag: 03.05.2008
(51) Int. Cl.: C08L 23/10, C08L 91/06

(54) **Metallocen-katalysierte Polyolefine in Wachsformulierungen und deren Verwendung für den Genauguss / Feinguss-Prozess**
Metallocen-catalysed polyolefins in growth formulations and their utilisation for exact casting / fine casting process
Polyoléfines catalysées au métallocène dans des formules de croissance et leur utilisation dans le procédé de fonte de précision

(30) Priorität: 11.05.2007 DE 102007022118
(43) Veröffentlichungstag der Anmeldung: 12.11.2008
(73) Patentinhaber: Clariant Finance (BVI) Limited, Road Town, Tortola (VG)
(72) Erfinder: Fell, Rainer Dr., 86368 Gersthofen (DE); Diem, Hermann, Dl., 86517 Wehringen (DE)
(74) Vertreter: Jacobi, Carola

(56) Entgegenhaltungen:
- EP-A- 1 645 608
- WO-A-01/10582
- JP-A- 58 000 348
- US-A- 3 705 123
- US-A- 4 703 078

## Beschreibung

Die vorliegende Erfindung betrifft die Verwendung von Wachsformulierungen mit metallocen-katalysierten Polyolefinen im Genauguss-Prozess / .

Der Genauguss-Prozess, auch bekannt unter dem Namen "lost-wax"-Prozess ist seit Jahrhunderten in Gebrauch. Im Genauguss-Prozess wird eine feuerfeste Gießform um das Wachsmodell aufgebaut. Nach dem Aufbau und Trocknen wird die Gießform erhitzt, so dass das Wachs schmilzt und abläuft. Die erhaltene Gussform wird gebrannt und wird dann als Negativform für den Metallguss benutzt.
Im Allgemeinen schließt der Genauguss-Prozess einen Teilprozess ein, in dem ein Wachs in ein Werkzeug injiziert wird, das den zu produzierenden Gegenstand als Negativform abbildet. So werden Wachsduplikate als Modelle des zu produzierenden Gegenstandes als Positivform produziert. Die folgenden Prozessschritte dienen der Erzeugung einer feuerfesten Gießform um das Wachsmodell. Teilschritte sind das Eintauchen des Wachsmodells oder vieler an einen Ast verklebte Wachsmodelle in eine keramische Aufschlämmung, anschließendes Besanden, Trocknen und Wiederholen dieser Vorgänge, bis die gewünschte Schichtdicke der Schale erreicht ist. Dann wird nach Trocknen der Schale das Wachs durch Erwärmen entfernt. Dabei wird die Gussform meist im Autoklaven mit Wasserdampf unter Druck erhitzt, damit das geschmolzene Wachs ausfließen kann. Auch drucklose Verfahren mit anderen Heizmethoden sind bekannt.
Nach dem Entwachsen wird die Keramik bei hohen Temperaturen gebrannt und somit ausgehärtet. Dabei werden auch Reste des Wachses verbrannt bevor das Metall gegossen wird. Es muss gewährleistet sein, dass alle Spuren der Bestandteile der Wachsformulierung von der keramischen Gussform entfernt wurden, um Defekte am Metallgussstück zu vermeiden.
Als nächster Schritt wird geschmolzenes Metall bzw. eine Metalllegierung in die heiße Gussform gegossen. Nach Abkühlen und Festwerden des Metalls wird die keramische Gussform vom Gussobjekt entfernt. Der Rohguss wird dann einem weiteren Finishprozess zugeführt, der Patinieren, Entgraten und Entfernen der Angussteile enthält.

Probleme beim Genauguss sind dann möglich, wenn das Wachs einer speziellen Wachsformulierung in das Werkzeug injiziert wird. Im Allgemeinen wird das Wachs bei erhöhter Temperatur injiziert, so dass das Wachs in alle Kavitäten des Werkzeuges fließt und diese komplett ausfüllt. Wachse werden unter Druck injiziert und werden so durch die Scherung etwas fließfähiger. So ist es nicht notwendig, die Wachsformulierung so weit zu erhitzen, dass sie so niederviskos wird, um alle Kavitäten zu füllen. Wird die Wachsformulierung in ein Werkzeug mit komplizierter Geometrie und unterschiedlichen Formteildicken injiziert, kühlen die Teilbereiche mit höherer Formteildicke langsamer als die mit geringerer Formteildicke.
Als Resultat findet man dann, dass die Bereiche mit dünneren Formteildicken mit hoher dimensionaler Genauigkeit abgebildet werden. Dagegen tendieren Bereiche mit höheren Formteildicken durch den höheren Schrumpf während des Abkühlprozesses damit zu Ungenauigkeiten in der Abbildegenauigkeit. Da das Wachs-Modell in der Regel ein eins zu eins Modell des zu produzierenden Metallgussstückes ist, pflanzen sich solche Ungenauigkeiten auch ins Endprodukt fort.
Des Weiteren bedingen solche unterschiedlichen Kühlraten und der unterschiedliche Schrumpf zwischen dünnen und dicken Formteildicken beträchtliche Spannungen im Wachsmodell, das beim Entnehmen aus dem Werkzeug eine Deformation des Modells bedingen kann. Auf diese Weise versucht das Modell die inneren Spannungen abzubauen.

Eine Lösung zur Erhöhung der Abbildegenauigkeit und Stabilität von Wachsmodellen wurde durch den Zusatz von verschiedenen Füllstoffen zu den Gusswachsformulierungen erreicht. Beispiele sind organische Säuren und inerte Polymere. Der Ausdruck "Füllstoff" wird hiermit definiert als diskrete, feste Partikel, die während des "lost-wax"-Prozesses nicht schmelzen. Der Einsatz von Füllstoffen hat zwar einige Eigenschaften der Genauguss-Wachsformulierungen verbessert, hat aber auch einige bestehende Probleme nicht lösen können und hat auch neue Probleme mit sich gebracht.

Unter verschiedenen, für den Einsatz als Füllstoffe für Genauguss-Wachsformulierung vorgeschlagene Materialien sind zum Beispiel Wasser, Isophthalsäure, Terephthalsäure, Bisphenol, Poly-alpha-methylstyrol, vernetztes Polystyrol und Polyethylenterephthalat. Nicht alle verändern alle relevanten physikalischen Eigenschaften in die richtige Richtung. So haben die in US 3465808 beschriebenen Polystyrol-Füllstoffe die Neigung dazu, dass das Wachs beim Ausschmelzen zuerst abfließt, aber der Polystyrol-Füllstoff in den Kavitäten zurückbleibt und dazu tendiert die Gussform aufzubrechen.
Organische Füllstoffe, wie Fumarsäure, Adipinsäure, Isophthalsäure und Terephthalsäure werden ebenso eingesetzt. Diese haben im Allgemeinen eine hohe thermische Leitfähigkeit. Deshalb kühlen die Modelle aus solchen Wachsformulierungen wie gewünscht auch schnell ab. Hauptnachteil bei der Verwendung saurer Füllstoffe ist die Möglichkeit, dass die Säure mit Bestandteilen der Gussformmasse reagiert und damit die Oberflächengüte und auch die Dimensionsgenauigkeit der Gussstücke beeinträchtigt. Weiter kann die hohe Wärmeleitfähigkeit bedingen, dass beim Ausschmelzen das Wachs sich zu schnell thermisch ausdehnt und damit den Mantel der Gussform zerbricht (shell cracking)

Inerte, polymere Füllstoffe reagieren zwar nicht mit Bestandteilen der Gussformmasse, haben aber eine schlechte thermische Leitfähigkeit und sind während des Dewaxing-Prozesses schwer aus der Gussform zu entfernen. Deshalb verbleiben beim Verbrennen des zurückgebliebenen Materials signifikante Aschereste in der Gussform, die sich dann an der Oberfläche des Gussstückes als Fehlstellen bemerkbar machen.
Oft werden Polystyrol-, Acryl-, Polyurethan-Polymere als inerte polymere Füllstoffe eingesetzt. Die Dichten dieser Füllstoffe liegen in der Regel über 1 kg/dm³ und sind im Allgemeinen signifikant höher als die Dichten der restlichen Komponenten einer Genauguss-Wachsformulierung.

WO-A-2001/10582 beschreibt ein Verfahren zum Genauguss aus einem niedrigschmelzendem Bindemittel und einem vernetzten und daher sehr hoch schmelzendem organischen Polycarbonat.

US-A-4703078 beschreibt Zusammensetzungen aus Polyolefin (Schmelzpunkt 122°C) und Wachs (Schmelzpunkt 90°C) für Schnitzblöcke.

US-A-3705123 beschreibt Zusammensetzungen aus niedrigschmelzendem Wachs und Polypropylen.

EP-A-1645608 beschreibt Heissschmelzkleber und Strassenmarkierungen aus Wachsmischungen von Metallocen Polypropylen Wachsen

Es war daher Aufgabe der Erfindung, Wachsformulierungen für den Genauguss-Prozess mit neuartigen Füllstoffen zur Verfügung zu stellen, die die oben genannten Nachteile, wie schlechtes Absetzverhalten (Sedimentation) und damit auch schlechtes Auslaufverhalten, hohe Restaschegehalte, zum Wachsgrundkörper stark unterschiedliche thermische Leitfähigkeit und mögliche Reaktion von chemischen Gruppen mit Bestandteilen der Gussformmasse, nicht zeigen.
Die Lösung der vorliegenden Aufgabe konnte überraschend durch die Verwendung einer Wachsformulierung
a.) als Füllstoff ein Polyolefinwachspulver, das in Gegenwart von Metallocen von chiralen oder achiralen Übergangsmetallverbindungen der Formel M¹Lₓ, bei der M ein Metallzentralatom aus der Gruppe Ti, Zr oder Hf und L einen pi-Liganden bedeuten, als Katalysator hergestellt ist, das einen Schmelzpunkt von über 120 °C aufweist und bei dem 90 % der Wachspulverpartikel einen Durchmesser von unter 250 µm aufweisen und 50 % der Wachspulverpartikel einen Durchmesser von unter 150 µm, und
b.) eine Basisformulierung mit einem Schmelzpunkt von unter 100 °C
für den Genauguss-Prozess, bei dem eine feuerfeste Gießform um ein Wachsmodell aufgebaut und nach dem Trocknen erhitzt wird, wobei das Wachs schmilzt und abläuft, und bei dem die so erhaltene Gussform gebrannt und dann als Negativform für den Metallguss benutzt wird, erreicht werden.
Die Wachspulver a.) schmelzen bei den üblichen Gebrauchstemperaturen während der Modellerzeugung nicht, insbesondere auch nicht während des Ausschmelzprozesses.

Die erfindungsgemäßen Wachspulver eignen sich hervorragend als Füllstoffe für die Verwendung in Wachsformulierungen für den Genauguss-Prozess, da diese eine sehr gute Verträglichkeit zu der Basisformulierung der Wachsformulierung aufweisen.

Die erfindungsgemäße Wachsformulierung enthält das Wachspulver oder die Wachspulvermischung a.) vorzugsweise in einem Verhältnis von 5 bis 60 Gew.-%, insbesondere bevorzugt in einem Verhältnis von 10 bis 50 Gew.-%, insbesondere besonders bevorzugt in einem Verhältnis von 25 bis 40 Gew.-% bezogen auf den Gesamtanteil der Wachsformulierung.

Die Bestandteile der im Stand der Technik bekannten Genauguss-Basisformulierungen (ohne Füllstoff) schmelzen gewöhnlich im Bereich von 40 °C bis 115 °C, deutlich unter dem Erweichungspunkt der erfindungsgemäßen Wachspulver. Die Basisformulierungen b.) werden entsprechend genauem Einsatzgebiet der Genauguss-Wachsformulierung bezüglich Schmelzpunkt, Viskosität, Schrumpf und Härte nach dem Fachmann bekannten Methoden eingestellt und angepasst.

Üblicherweise werden als Basisformulierung b.) Paraffine, Harze oder langkettige Kohlenwasserstoffe eingesetzt.

Die Basisformulierung b.) ist vorzugsweise in einem Verhältnis von 50 bis 95 Gew.-% bezogen auf den Gesamtanteil der Wachsformulierung enthalten.

Das Wachspulver a.) der erfindungsgemäßen Wachsformulierung hat einen Schmelzpunkt von größer 120 °C, bevorzugt von größer 135 °C, besonders bevorzugt von größer 150 °C.

Erfindungsgemäß verwendete Wachspulver oder Wachspulvermischungen a.) sind definitionsgemäß Polyolefinwachse, die vorzugsweise aus Homopolymerisaten des Propylens oder Copolymerisaten des Propylens mit Ethylen oder mit einem oder mehreren 1-Olefinen, hergestellt werden.

Das Wachspulver oder die Wachspulvermischung a.) enthält ein Wachs, das in Gegenwart von Metallocen als Katalysator aus Olefinen, vorzugsweise aus Propylen, durch Polymerisation hergestellt worden ist. Die Synthese der Metallocen-Polyolefinwachse kann unter einem Druck von 0,1 bis 10 MPa in Gasphase oder in Suspension oder in Lösung in einem geeigneten Suspendier-/Lösungsmittel nach bekannten Technologien erfolgen.

Beispiele für die Metallocen-Polyolefinwachse, die bevorzugt als Wachspulver oder Wachspulvermischungen als Füllstoffe in Wachsformulierungen eingesetzt werden, sind z. B.:

Metallocen-PP(Polypropylen)-Wachse, wie:
TP Licocene^{®} PP 6102
TP Licocene^{®} PP 6502
TP Licocene^{®} PP 7402
TP Licocene^{®} PP 7502

Zudem können die erfindungsgemäßen Wachsformulierungen auch weitere Additive wie z. B. andere Polymere, Harze oder weitere Füllstoffe enthalten.

Geeignete Additive sind zum Beispiel Petroleumwachse, natürliche pflanzliche oder mineralische Wachse, synthetische Wachse, Polymere andere Monomere als Propylen und Ethylen, harzartige Materialen abgeleitet vom Refining von Erdöl oder Baumharz, Kohlenwasserstoffharze oder terpenartige Harze oder Mischungen dieser oder Umsetzungsprodukte aus Fettsäuren und mehrwertigen Diaminen (z. B. Ethylendiamin) (Amidwachse) oder ähnlicher Materialien.

Weitere geeignete Additive und Füllstoffe sind: organische Säuren, Polystyrol, vernetztes Polystyrol, Harnstoff, Polyacrylate, Celluloseacetate, Bisphenole, Polyethylenterephthalat und hoch schmelzende Polyole.

In einer bevorzugten Ausführungsform werden als Additive Metallocen-PP-Wachse in Anteilen von 0 bis 50 Gew.-% bezogen auf das Gesamtgewicht der Wachsformulierung eingesetzt. Diese dienen z. B. zur:
- Erhöhung oder Erniedrigung der Viskosität der Wachsformulierung
- Erhöhung der thermischen und mechanischen Festigkeit des Wachsformteils oder/und
- Reduzierung der thermischen Expansion (Schrumpf)

Die als Additiv verwendeten Polypropylenwachse besitzen vorzugsweise einen niedrigeren Schmelzpunkt als die Wachse a.), insbesondere einen Schmelzpunkt < 110 °C.

Beispiele für die Metallocen-Polyolefinwachse, die erfindungsgemäß als Additiv in Form von Wachspulvern oder Wachsgranulaten in den Wachsformulierungen eingesetzt werden können, sind z. B.:

Metallocen-PP-Wachse, wie:
TP Licocene^{®} PP 1302
TP Licocene^{®} PP 1502
TP Licocene^{®} PP 2602
TP Licocene^{®} PP 3502

Beispiele für die Polyolefinwachse, die erfindungsgemäß als Additiv in Form von Wachspulvern oder Wachsgranulaten in den Wachsformulierungen eingesetzt werden können, sind z. B.:
Licowax^{®} PP 230
Ceridust^{®} 6071

Beispiele für Umsetzungsprodukte aus Fettsäuren und mehrwertigen Diaminen (Amidwachse), die erfindungsgemäß als Additiv in Form von Wachspulvern oder Wachsgranulaten in den Wachsformulierungen eingesetzt werden können, sind z. B.:
Ethylenebisstearamide
Licowax^{®} C

Hersteller der vorgenannten Wachse ist die Clariant Produkte (Deutschland) GmbH.

Metallocenkatalysatoren zur Herstellung der Polyolefinwachse sind chirale oder achirale Übergangsmetallverbindungen der Formel M¹Lₓ. Die Übergangsmetallverbindung M¹Lₓ enthält mindestens ein Metallzentralatom M¹, an das mindestens ein π-Ligand, z. B. ein Cyclopentadienylligand, gebunden ist.
Darüber hinaus können Substituenten, wie z. B. Halogen-, Alkyl-, Alkoxy- oder Arylgruppen an das Metallzentralatom M1 gebunden sein. M¹ ist wie Ti, Zr oder Hf.

Unter Cyclopentadienylligand sind unsubstituierte Cyclopentadienylreste und substituierte Cyclopentadienylreste wie Methylcyclopentadienyl-, Indenyl-, 2-Methylindenyl-, 2-Methyl-4-phenylindenyl-, Tetrahydroindenyl- oder Octahydrofluorenylreste zu verstehen. Die π-Liganden können verbrückt oder unverbrückt sein, wobei einfache und mehrfache Verbrückungen - auch über Ringsysteme - möglich sind. Die Bezeichnung Metallocen umfasst auch Verbindungen mit mehr als einem Metallocenfragment, so genannte mehrkernige Metallocene. Diese können beliebige Substitutionsmuster und Verbrückungsvarianten aufweisen. Die einzelnen Metallocenfragmente solcher mehrkernigen Metallocene können sowohl gleichartig als auch voneinander verschieden sein. Beispiele für solche mehrkernigen Metallocene sind z. B. beschrieben in EP-A-0 632 063.

Beispiele für allgemeine Strukturformeln von Metallocenen sowie für deren Aktivierung mit einem Cokatalysator sind u. a. in EP-A- 0 571 882 gegeben.

Die erfindungsgemäße Wachsformulierung besitzt überraschenderweise ein sehr gutes thermisches Ausdehnungsverhalten sowie eine sehr gute Abbildegenauigkeit und Dimensionsstabilität des Positivmodells.

Da die erfindungsgemäß eingesetzten Wachse a.) keine reaktiven chemischen Gruppen enthalten und somit chemisch inert sind findet keine Reaktion mit Bestandteilen der handelsüblichen Gussformmassen statt, was in Bezug auf die Oberflächengüte und auf die Dimensionsgenauigkeit der Gussstücke förderlich ist. Die beschriebenen Wachse zeichnen sich durch eine sehr gute Verträglichkeit zu den Basisformulierungen der Wachsformulierung aus. Dies zeigt sich in einer sehr guten Benetzung des Wachspulvers a.) durch die geschmolzene Bestandteile einer Genauguss-Wachsformulierung.

Durch die sehr ähnlichen Dichten der Wachse a.)und der Basisformulierung b.) wird garantiert, dass das Absetzverhalten des Füllstoffes a.) kaum ausgeprägt ist. Dies äußert sich in einer sehr stabilen Suspension.
Aufgrund der kleinen thermischen Ausdehnungskoeffizienten verhindert das gute thermische Verhalten der Wachspulver beim Aufheizen während des AusschmelzProzesses (Dewaxing) ein Zerbrechen der keramischen Schalen (shell-cracking). Die nach dem Ausschmelz-Prozess notwendige rückstandslose Verbrennung der nicht ausgeflossenen Wachsreste wird durch den sehr niedrigen Restaschegehalt des Wachspulvers a.) verbessert, so dass eine besonders hohe Oberflächengüte der Gussteile erreicht wird.

Das erfindungsgemäße Wachspulver a.) wird durch Vermahlen hergestellt. Dabei haben 90 % der Wachspulverpartikel einen Durchmesser von unter 250 µm, bevorzugt unter 200 µm, besonders bevorzugt unter 150 µm und mindestens 50 % der Partikel haben einen Durchmesser von unter 150 µm, bevorzugt unter 100 µm, besonders bevorzugt unter 75 µm.

Die Wachspulver a.) haben bei 20 °C eine Dichte von 0.85 bis 1.20 g/cm³, bevorzugt von 0.87 bis 0.97 g/cm³, besonders bevorzugt von 0.87 bis 0.92 g/cm³.

Die erfindungsgemäße Wachsformulierung wird in Platten, Granulatform, Flocken oder anderen üblichen Gebrauchsformen gebracht.

Die Wachspulver-Füllstoffe a.) können aus der geschmolzenen Wachsformulierung abfiltriert werden. Das erlaubt ein Recycling der Wachse- was zu erheblichen Einsparungen von Werkstoff und Kosten im Genauguss-Prozess führt.

Die erfindungsgemäßen Wachsformulierungen besitzen den großen Vorteil, dass diese beim Ausschmelz-Prozess (Dewaxing) nicht an den Innenwänden der Keramikschalen haften was zu hohen Wiedergewinnungsraten und hohen Oberflächengüten der Gussstücke führt.
Die Temperaturen beim Dewaxing-Prozess liegen üblicherweise im Bereich von 140 °C bis 180 °C. Nach dem Ausschmelzen wird die Keramikform bei Temperaturen über 600 °C gebrannt. Die nicht ausgelaufenen Bestandteile der Wachsformulierung (Restwachs in der Keramikform) verbrennen.
Die erfindungsgemäßen Wachsformulierungen haben einen niedrigen Restaschegehalt. Nach dem Verbrennen der Rückstände verbleiben in der Keramikform, üblicherweise unter 0,02 Gew.-% der Mischung. Das Wachspulver (Füllstoff) verbrennt dabei fast rückstandslos.

Weiterhin von ökologischen Vorteil ist, dass die verwendeten Wachspulver a.) keine Gefahrstoffe und nicht gesundheitsschädlich sind.

Die Erfindung wird durch die nachstehenden Beispiele erläutert, ohne sie darauf einzuschränken.

### Beispiele:

In den nachfolgenden Beispielen werden folgende Wachse a.) in Pulverform als Füllstoffe in den Genauguss-Wachsformulierungen eingesetzt:

Metallocen-PP-Wachse
TP Licocene^{®} PP 6102
TP Licocene^{®} PP 6502
TP Licocene^{®} PP 7402
TP Licocene^{®} PP 7502

Als Additive wurden folgende Wachse verwendet

Metallocen-PP-Wachse, wie:
TP Licocene^{®} PP 1302
TP Licocene^{®} PP 1502
TP Licocene^{®} PP 2602
TP Licocene^{®} PP 3502

Polyolefinwachse, wie:
Licowax^{®} PP 230
Ceridust^{®} 6721

Umsetzungsprodukte aus Fettsäuren und mehrwertigen Diaminen (Amidwachse) wie:
Ethylenebisstearamid
Licowax^{®} C

Hersteller der vorgenannten Wachse ist die Clariant Produkte (Deutschland) GmbH.

### Beispiel 1:

Es wurde eine Wachspulver a.) durch Vermahlen von Granulat aus TP Licocene^{®} PP 6102 hergestellt.
Charakterisiert wird das Material durch einen Tropfpunkt von ca. 145 °C und eine dynamische Viskosität von 60 mPas bei 170 °C. Mechanische Prüfungen an Norm-Prüfkörpern ergaben folgende Messwerte:
Nadelpenetrationszahl: < 1

Das erhaltene Pulver, das als Füllstoff für die Genauguss-Wachsformulierungen eingesetzt wird hat folgende Korngrößenverteilung: 90 % der Partikel einen Durchmesser von unter 150 µm. 50 % der Partikel haben einen Durchmesser von unter 75 µm.

### Beispiel 2:

Es wurde eine Wachspulver durch Vermahlen von Granulat aus TP Licocene® PP 7402 hergestellt.
Charakterisiert wird das Material durch einen Erweichungspunkt von ca. 165 °C und eine dynamische Viskosität von 800 mPas bei 170 °C. Mechanische Prüfungen an Norm-Prüfkörpern ergaben folgende Messwerte:
Nadelpenetrationszahl: < 1

Das erhaltene Pulver, das als Füllstoff für die Genauguss-Wachsformulierungen eingesetzt wird hat folgende Korngrößenverteilung: 90 % der Partikel einen Durchmesser von unter 250 µm. 50 % der Partikel haben einen Durchmesser von unter 75 µm.

### Beispiel 3:

Es wurde eine Wachspulver durch Vermahlen von Granulat aus TP Licocene® PP 7502 hergestellt.
Charakterisiert wird das Material durch einen Erweichungspunkt von ca. 165 °C und einer dynamischen Viskosität von 1800 mPas bei 170 °C. Mechanische Prüfungen an Norm-Prüfkörpern ergaben folgende Messwerte:
Nadelpenetrationszahl: < 1

Das erhaltene Pulver, das als Füllstoff für die Genauguss-Wachsformulierungen eingesetzt wird, hat folgende Korngrößenverteilung: 90 % der Partikel einen Durchmesser von unter 250 µm. 50 % der Partikel haben einen Durchmesser von unter 75 µm.

### Beispiel 4:

Es wurde eine Genauguss-Wachsformulierung aus folgenden Komponenten hergestellt:
60 % Paraffin 60/62 (Basiswachs b.)
25 % TP Licocene^{®} PP 7402 (gemahlen) (Füllstoff a.)
15 % TP Licocene^{®} PP 3502 (Additiv)

Charakterisiert wird die Genauguss-Wachsformulierung durch einen Tropfpunkt von ca. 83 °C und einer dynamischen Viskosität von ca. 33 mPas bei 100 °C (ca. 60 mPas bei 90 °C). Mechanische Prüfungen an Norm-Prüfkörpern ergaben folgende Messwerte:
- Nadelpenetrationszahl:: ca. 5
- Dichte:: ca. 0,91 kg/dm³
- Verfestigung:: bei ca. 60 °C

### Beispiel 5:

Es wurde eine Genauguss-Wachsformulierung aus folgenden Komponenten hergestellt:
60 % Paraffin 60/62 (Basiswachs b.)
25 % TP Licocene^{®} PP 7502 (gemahlen) (Füllstoff a.)
15 % TP Licocene^{®} PP 3502 (Additiv)

Charakterisiert wird die Genauguss-Wachsformulierung durch einen Tropfpunkt von ca. 81 °C und einer dynamischen Viskosität von ca. 33 mPas bei 100 °C (ca. 60 mPas bei 90 °C). Mechanische Prüfungen an Norm-Prüfkörpern ergaben folgende Messwerte:
- Nadelpenetrationszahl:: ca. 8
- Dichte:: ca. 0,91 kg/dm³
- Verfestigung:: bei ca. 60 °C

### Beispiel 6:

Es wurde eine Genauguss-Wachsformulierung aus folgenden Komponenten hergestellt:
60 % Paraffin 60/62 (Basiswachs b.)
25 % TP Licowax^{®} PP 230 (gemahlen) (Füllstoff a.)
15 % TP Licocene^{®} PP 3502 (Additiv)

Charakterisiert wird die Genauguss-Wachsformulierung durch einen Tropfpunkt von ca. 115 °C und einer dynamischen Viskosität von ca. 250 mPas bei 100 °C (ca. 310 mPas bei 90 °C). Mechanische Prüfungen an Norm-Prüfkörpern ergaben folgende Messwerte:
- Nadelpenetrationszahl:: ca. 10
- Dichte:: ca. 0,71 kg/dm³
- Verfestigung:: bei ca. 68 °C

### Beispiel 7:

Es wurde eine Genauguss-Wachsformulierung aus folgenden Komponenten hergestellt:
60 % Paraffin 60/62 (Basiswachs b.)
25 % Ceridust^{®} 6071 (gemahlen) (Füllstoff a.)
15 % TP Licocene^{®} PP 3502 (Additiv)

Charakterisiert wird die Genauguss-Wachsformulierung durch einen Tropfpunkt von ca. 89 °C und einer dynamischen Viskosität von ca. 490 mPas bei 100 °C (ca. 600 mPas bei 90 °C). Mechanische Prüfungen an Norm-Prüfkörpern ergaben folgende Messwerte:
- Nadelpenetrationszahl:: ca. 9
- Dichte:: ca. 0,85 kg/dm³
- Verfestigung:: bei ca. 105 °C

### Beispiel 8:

Es wurde eine Genauguss-Wachsformulierung aus folgenden Komponenten hergestellt:
60 % Paraffin 60/62 (Basiswachs b.)
25 % Ethylenebisstearamid (gemahlen) (Füllstoff a.)
15 % TP Licocene^{®} PP 3502 (Additiv)

Charakterisiert wird die Genauguss-Wachsformulierung durch einen Tropfpunkt von ca. 88 °C und einer dynamischen Viskosität von ca. 775 mPas bei 100 °C (ca. 950 mPas bei 90 °C). Mechanische Prüfungen an Norm-Prüfkörpern ergaben folgende Messwerte:
- Nadelpenetrationszahl:: ca. 11
- Dichte:: ca. 0,95 kg/dm³
- Verfestigung:: bei ca. 72 °C

## Patentansprüche

1. Verwendung einer Wachsformulierung enthaltend
a.) als Füllstoff ein Polyolefinwachspulver, das in Gegenwart von Metallocen von chiralen oder achiralen Übergangsmetallverbindungen der Formel M¹Lₓ, bei der M ein Metallzentralatom aus der Gruppe Ti, Zr oder Hf und L einen pi-Liganden bedeuten, als Katalysator hergestellt ist, das einen Schmelzpunkt von über 120 °C aufweist und bei dem 90 % der Wachspulverpartikel einen Durchmesser von unter 250 µm aufweisen und 50 % der Wachspulverpartikel einen Durchmesser von unter 150 µm, und
b.) eine Basisformulierung mit einem Schmelzpunkt von unter 100 °C für den Genauguss-Prozess, bei dem eine feuerfeste Gießform um ein Wachsmodell aufgebaut und nach dem Trocknen erhitzt wird, wobei das Wachs schmilzt und abläuft, und bei dem die so erhaltene Gussform gebrannt und dann als Negativform für den Metallguss benutzt wird.

2. Verwendung einer Wachsformulierung nach Anspruch 1, **dadurch gekennzeichnet, dass** das Polyolefinwachspulver a.) in einem Verhältnis von 5 bis 60 Gew.-% und die Basisformulierung b.) in einem Verhältnis von 50 bis 95 Gew.-%, bezogen auf den Gesamtgehalt der Wachsformulierung, enthalten ist.

3. Verwendung einer Wachsformulierung nach Anspruch 1 oder 2, **dadurch gekennzeichnet, dass** die Wachsformulierung weitere Additive an Metallocen-PP-Wachs in Anteilen von 0 bis 50 Gew.-%, bezogen auf das Gesamtgewicht der Wachsformulierung enthält.

4. Verwendung einer Wachsformulierung nach Anspruch 3, **dadurch gekennzeichnet, dass** das als Additiv enthaltene Metallocen-PP-Wachs einen Schmelzpunkt von kleiner als 110 °C besitzt.

5. Verwendung einer Wachsformulierung nach mindestens einem der vorhergehenden Ansprüche 1 bis 4, **dadurch gekennzeichnet, dass** als weitere Additive und Füllstoffe organische Säuren, Polystyrol, vernetztes Polystyrol, Harnstoff, Polyacrylate, Celluloseacetate, Bisphenole, Polyethylenterephthalat, und hochschmelzende Polyole zugemischt werden.

6. Verwendung einer Wachsformulierung nach mindestens einem der vorhergehenden Ansprüche, **dadurch gekennzeichnet, dass** das Polyolefinwachspulver a.) bei 20 °C eine Dichte von 0,85 bis 1,20 g/cm³ besitzt.

## Claims

1. The use of a wax formulation comprising
a.) a polyolefin wax powder which has been prepared in the presence of metallocenes of chiral and achiral transition metal compounds of the formula M1 Lx, where M is a central metal atom chosen from the group consisting of Ti, Zr or Hf and L is a pi-ligand, as catalysts, which has a melting point above 120°C and in which 90% of the wax powder particles have a diameter below 250 µm, and 50% of the wax powder particles have a diameter below 150 µm, as filler, and
b.) a base formulation having a melting point below 100°C, for the precision casting process, where a refractory casting mold is built around the wax model and heated after drying with the wax melting and running out and the casting mold thus obtained is fired and then used as negative mold for metal casting.

2. The use of a wax formulation as claimed in claim 1, wherein the polyolefin wax powder a.) is present in a proportion of from 5 to 60% by weight and the base formulation b.) is present in a proportion of from 50 to 95% by weight, based on the total wax formulation.

3. The use of a wax formulation as claimed in claim 1 or 2, wherein the wax formulation comprises further additives of metallocene PP wax in amounts of from 0 to 50% by weight, based on the total wax formulation.

4. The use of a wax formulation as claimed in claim 3, wherein the metallocene PP wax present as additive has a melting point of less than 110°C.

5. The use of a wax formulation as claimed in at least one of the preceding claims 1 to 4, wherein organic acids, polystyrene, crosslinked polystyrene, urea, polyacrylates, cellulose acetates, bisphenols, polyethylene terephthalate and high-melting polyols are mixed in as further additives and fillers.

6. The use of a wax formulation as claimed in at least one of the preceding claims, wherein the polyolefin wax powder a.) has a density at 20°C of from 0.85 to 1.20 g/cm³.

## Revendications

1. Utilisation d'une formulation de cire, contenant
a.) comme charge une poudre de cire de polyoléfine, qui est préparée en présence de métallocène de composés métalliques de transition chiraux ou achiraux de formule M¹Lₓ, dans laquelle M signifie un atome central métallique du groupe Ti, Zr ou Hf et L un ligand pi, comme catalyseur, qui présente un point de fusion supérieur à 120°C et dans laquelle 90% des particules de poudre de cire présentent un diamètre inférieur à 250 µm et 50% des particules de poudre de cire présentent un diamètre inférieur à 150 µm, et
b.) une formulation de base présentant un point de fusion inférieur à 100°C
pour le procédé de moulage de précision (à modèles perdus), dans lequel un moule de coulée réfractaire est formé autour d'un modèle en cire et chauffé après séchage, la cire fondant et s'écoulant, et le moule de coulée ainsi obtenu est calciné puis utilisé comme moule négatif pour le coulage de métal.

2. Utilisation d'une formulation de cire selon la revendication 1, **caractérisée en ce que** la poudre de cire de polyoléfine a.) est contenue dans un rapport de 5 à 60% en poids et la formulation de base b.) dans un rapport de 50 à 95% en poids, par rapport à la teneur totale de la formulation de cire.

3. Utilisation d'une formulation de cire selon la revendication 1 ou 2, **caractérisée en ce que** la formulation de cire contient d'autres additifs de cire de métallocène-PP en des proportions de 0 à 50% en poids, par rapport au poids total de la formulation de cire.

4. Utilisation d'une formulation de cire selon la revendication 3, **caractérisée en ce que** la cire de métallocène-PP contenue comme additif présente un point de fusion inférieur à 110°C.

5. Utilisation d'une formulation de cire selon au moins l'une quelconque des revendications précédentes 1 à 4, **caractérisée en ce que** des acides organiques, du polystyrène, du polystyrène réticulé, de l'urée, des polyacrylates, de l'acétate de cellulose, des bisphénols, du poly(téréphtalate d'éthylène) et des polyols à haut point de fusion y sont mélangés en tant qu'autres additifs et charges.

6. Utilisation d'une formulation de cire selon au moins l'une quelconque des revendications précédentes, **caractérisée en ce que** la poudre de cire de polyoléfine a.) présente, à 20°C, une densité de 0,85 à 1,20 g/cm³.
